(19) Europäisches Patentamt
European Patent Office
Office européen des brevets

(11) Publication number: 0 319 343
A2

(12) # EUROPEAN PATENT APPLICATION

(21) Application number: 88311488.6

(22) Date of filing: 05.12.88

(51) Int. Cl.4: G 11 B 7/24

(30) Priority: 03.12.87 JP 306741/87

(43) Date of publication of application:
07.06.89 Bulletin 89/23

(84) Designated Contracting States: DE GB

(71) Applicant: FUJI PHOTO FILM CO., LTD.
210 Nakanuma Minami Ashigara-shi
Kanagawa 250-01 (JP)

(72) Inventor: Yabe, Masao
c/o Fuji Photo Film Co. Ltd. No. 200, Oonakazato
Fujinomiya-shi Shiquoka (JP)

Inagaki, Yoshio
c/o Fuji Photo Film Co. Ltd. No. 210, Nakanuma
Minami-ashigara-shi Kanagawa (JP)

(74) Representative: Arthur, Bryan Edward et al
4 Dyers Buildings Holborn
London, EC1N 2JT (GB)

(54) **Information recording medium.**

(57) An information recording medium comprises a substrate made of amorphous polyolefin and a recording layer for writing and/or reading information by means of a laser beam which is provided on the substrate. The recording layer comprises a cyanine dye having an indolenine structure.

EP 0 319 343 A2

**Description**

## INFORMATION RECORDING MEDIUM

## BACKGROUND OF THE INVENTION

Field of the invention

The present invention relates to an information recording medium and process for producing thereof. More particularly, it relates to an information recording medium for writing and/or reading information by means of a laser beam using high energy density, wherein said recording medium utilize a dye as a recording material.

Description of prior art

Information recording media for recording and/or reproducing information by the use of a laser beam of high energy density have been developed in recent years and are put into practical use. Such recording media have been widely utilized in various fields' for example. as an optical disc such as a video disc and an audio disc as well as a disc memory for a large-capacity computer and a large-capacity static image file, a micro-image recording medium, an ultramicro-image recording medium. a micro-facsimile, and an optical card.

The information recording medium basically comprises a transparent substrate of plastic or glass material and a recording layer provided on the substrate. As materials of the recording layer, metals such as Bi, Sn, In and Te or semimetals. and dyes such as a cyanine dye, a metal complex compound and a quinone dye are generally known.

Writing of information on the recording medium can be conducted, for example, by irradiating the medium with a laser beam. Under irradiation with the laser beam, the irradiated area of the recording layer of the recording medium absorbs energy of the beam and rise of temperature locally occurs and, as a result, a chemical or physical change is caused to alter (or change) optical characteristics of the recording layer in the irradiation area, whereby the recording of information is made. Reading of the information from the recording medium is also conducted by irradiating the medium, with a laser beam. The information can be reproduced by detecting reflected light or transmitted light corresponding to the change in the optical characteristics of the recording layer.

Recently, an optical disc having an air-sandwich structure for protecting the recording layer has been proposed. The optical disc of air-sandwich structure comprises two disc-shaped substrates, a recording layer provided on at least one of the substrates and two ring-shaped spacers (inner spacer and outer spacer), said two substrates interposing the recording layer being combined with each other in such a manner that a closed space is formed by the two substrates and the two spacers.

From the viewpoint of simplicity of manufacturing process and handling properties, preferred examples of the substrate materials generally selected from those plastic including acrylic resins such as cell-case polymethyl methacrylate and injection-molded polymethyl methacrylate; polyvinyl chloride resins; epoxy resins; and polycarbonate resins.

There is proposed a substrate made of amorphous polyolefin containing a norbornene compound as a novel plastic substrate suitable for an information recording medium in Japanese Patent Provisional Publication No. 61(1986)-292601. While having high resistance to solvents and to heat, this substrate also shows excellent performance on such properties as high transparency or low birefringence which are indispensable requisites to a disc substrate. Accordingly, it is described that an information recording medium can be obtained by providing a recording layer on said substrate, and the recording layer to be provided thereon can be either of metal or dye.

## Summary of the Invention

It is an object of the present invention to provide a novel information recording medium which utilizes a dye as a recording material, more particularly to an information recording medium with substantially improved C/N ratio.

There is provided by the invention an information recording medium comprising a substrate made of amorphous polyolefin and a recording layer for writing and/or reading information by means of a laser beam which is provided on the substrate, wherein said recording layer comprises a cyanine dye having an indolenine structure.

The most characteristic feature of the invention lies in the fact that it employs amorphous polyolefin as a substrate of an information recording medium of which recording material contains a dye, and that it employs specifically a cyanine dye having an indolenine structure as a dye for a recording material. It has been proved that by providing the cyanine dye having the indolenine structure having a large absorption coefficient for a particular light and a high reflectance on the amorphous polyolefin substrate having not only high resistance to solvents and to heat as a substrate for an optical disc, but also high transparancy and low birefringence which

are requisites to a disc substrate, characteristic features synergistically give an information recording medium having a high C/N with no lowering of reflectance.

## Detailed Description of the Invention

An information recording medium of the invention can be prepared, for example, by the following process.

The substrate employable in the invention is made of an amorphous polyolefin such as atactic polypropylene, a propylene-ethylene copolymer or a polyolefin containing norbornene compound. The preferably employed is the amorphous polyolefin containing a norbornene compound.

Such amorphous polyolefin is obtainable, for example, by quenching and molding a low stereospecific polyolefin resin, and in the amorphous polyolefin substantially no lattice pattern is observed by the X-rays analysis. A substrate made of the amorphous polyolefin is already known as described above. For molding the amorphous polyolefin to form a substrate, a conventional molding method such as an injection molding or an extrusion molding can be utilized.

The substrate may be provided with a pregroove for the purpose of forming a tracking groove or protruded and depressed portions for indicating information such as address signals.

On the surface of the substrate where a recording layer is to be placed may be provided an undercoating layer for the purpose of improving smoothness and adhesion to the recording layer, preventing the recording layer from being denatured, and increasing the sensitivity for the recording procedure.

On the substrate (or the undercoating layer) is then provided a recording layer, that is a characteristic requisite of the present invention.

A recording layer of the information recording medium of the present invention is a layer comprising substantially only a dye, or the layer comprising a dye dispersed in a binder, which is ususally formed on the substrate by coating procedure.

The dye to be employed for the invention has to be a cyanine dye which has an indolenine structure. The indolenine structure basically means the following structure. The cyanine dye employed for the inven tion has the following moriety in its molecule as structure.

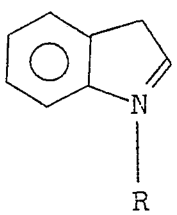

Although the above structure does not specifically indicate a presence of substituent group, a substituent group can be present at any position.

Examples of the cyanine dye having the above illustrated indolenine structure includes the following formula.

(I) 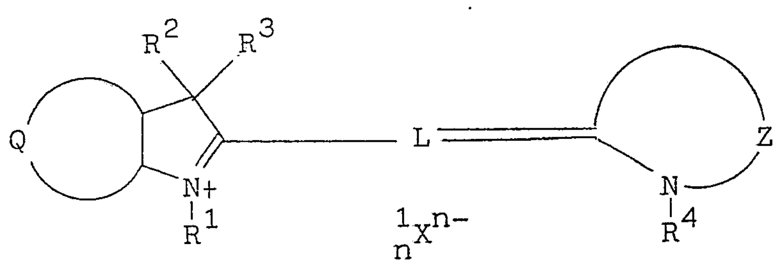

wherein Q represents an atom group to form, together with the attached unit (-C-C- bond of the pyrrolinyl group), a benzene ring or a naphthalene ring; Z represents an atom group to form, together with attached unit

( 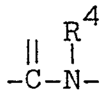 bond),

a 5 or 6 membered heterocyclic ring; L represents a tervalent group which is formed by connecting one, three, five, or seven methiene group(s) in such manner that they form a conjugated double bond; $X^{n-}$ represents n valent counter ion, n represents 1 or 2; each of $R^1$ , $R^2$, $R^3$ and $R^4$ represents an alkyl group or an aryl group; L may be linked to R , $R^2$, $R^3$ or $R^4$ to form a ring; each of Q, Z, L, $R^1$ $R^2$, $R^3$ and $R^4$ may have a substituent group; and $X^{n-}$ may be substituted for Q, Z, L, $R^1$, $R^2$, $R^3$ or $R^4$ to form an inner salt.

Preferred examples of the ring completed by the use of the atom group represented by Q include a benzene ring, a naphthalene ring, or those rings substituted by substituent groups such as a halogen atom, an alkyl group, phenyl group, an acyl group, cyano group, and an alkyl or arylsulfonyl group.

Preferred examples of rings completed by the use of the atom group represented by Z include an indolenine ring, a naphthoindolenine ring, a benzthiazole ring, a naphthothiazole ring, a benzoxazole ring, a benzoselenazole ring, a benzoterlazole ring, and quinoline ring. Further, a halogen atom, an alkyl group, phenyl group, an alkoxy group, an acyl group, cyano group, ar an alkyl or arylsulfonyl group may be attached to those rings.

$X^{n-}$ preferably is a monovalent counter ion which include $C\ell^-$, $Br^-$, $I^-$, a halide ion, $C\ell O_4^-$, $PF_6^-$, $SbF_6^-$, $BF_4^-$, $HSO_4^-$, $H_2PO_4^-$, a methylsulfate, ethylsulfate, p-toluenesulfonate, methansulfonate, trifluoromethansulfonate, and naphtharen-1,5-disulfonate.

Each of $R^1$, $R^2$, $R^3$ and $R^4$ is a substituted or unsubstituted alkyl group having 1 to 6 carbon atoms, and each may further contain a halogen atom, a substituted or unsubstituted alkoxy group, a substituted or unsubstituted phenyl group, and substituent group such as cyano group or acyl group or may be linked to a substituted or unsubstituted alkyl group or substituted or unsubstituted phenyl group by -CONR-, $-SO_2NR-$, $-SO_2-$(wherein R represents H, or either an alkyl group or aralkyl group having 1 to 8 carbon atoms).

As material of the recording layer to be provided on the above described substrate made of amorphous polyolefin, the cyanine dye is most suitable and has superiority over others in thoes points described hereinafter. Accordingly, by utilizing this specific dye as material of the recording layer together with the above substrate, an information medium of prominently high performance can be obtained.

First of all. the cyanine dye having the indolenine structure has not only higher absorbtion coefficient of light but also a higher reflectance, which enables it to show both good recording sensitivity and a high C/N (carrier/noise ratio) for reproducing the recorded information. Accordingly, by employing such specific cyanine dye having the indolenine structure formed on the above described substrate made of amoruphous polyolefin (preferably one containing a nonbornene compound) which shows excellent resistance to solvents and optical property, an information recording medium showing a high C/N value can be obtained with no lowering of reflectance owing to synergistically combined excellent characteristics.

Secondly, the cyanine dye having the indolenine structure has excellent heat resistance. A napthoquinone dye or an anthraquinone dye, on the other hand, is apt to crystallize after storage at a high temperature which brings about lowering of reflectance or increase of noise. However, the above-mentioned cyanine dye does not show such crystallization with the passage of time. The above-stated amorphous polyolefin substrate is also highly heat-resistant. Therefore, by using the cyanine dye having the indolenine structure for the recording layer, heat-resistance of the obtained information recording medium synergistically increases, so that an information recording medium with remarkably high heat resistance can be obtained.

In addition, because the cyanine dye having the indolenine structure shows high solubility to halogenated hydrocarbons, a uniform, thin recording layer can be obtained through a coating method such as spin coating by coating a solution obtained by dissolving the cyanine dye in a halogenated hydrocarbon on the amorphous polyolefin substrate which is insoluble to the halogenated hydrocarbon. In contrast, there are some dyes such as a napthoquinone or an anthraquinone which can not be coated on the substrate because they show low solubility to solvents such as halogenated hydrocarbons and hence a well apllicable solution cannot be obtained. Also, in the case of naphthalocyanine dye, its solubility to halogenated hydrocarbons is so low that it can not be coated on the substrate in the form of a solution in a halogenated hydrocarbon. This dye could be coated on the substrate by using a hydrocarbon solvents which has strong dissolving power. However, it is impossible to give a uniform dye-coated recording layer, because the substrate is dissolved in hydrocarbonate solvent, and furthermore. the grooves on the substrate will be diminished by the dissolving power of the solvent.

Accordingly, an information recording medium (such as disc) of the present invention not only has various excellent features such as a high C/N value, but also a considerable advantage in its manufacturing process as stated above.

The above-described cyanine dye having the indolenine structure employable in the present invention can be used in combination with those conventionally used as recording materials of information recording media. Examples of such dyes include a cyanine dye which does not have the indolenine structure, a phthalocyanine dye, a pyrylium dye, a thiopyrylium dye, an azulenium dye, a squarillium dye, a metal complex salt dye having a metal atom such as Ni or Cr, a naphthoquinone dye, an anthraquinone dye, an indophenol dye, an indoaniline

dye, a triphenylmethane dye, a triallylmethane dye, an aminium dye, a diimmonium dye and a nitroso compound.

Among those dyes, preferred are dyes showing high absorption for a light in the wavelength region of near infrared rays such as 700 to 900 nm, because a semiconductor laser giving the near infrared rays is used in practical as a laser for recording and reproducing infomation.

Examples of the cyanine dyes employed for the invention are as follows. However, the scope of the invention is by no means limited to those described below.

[1]

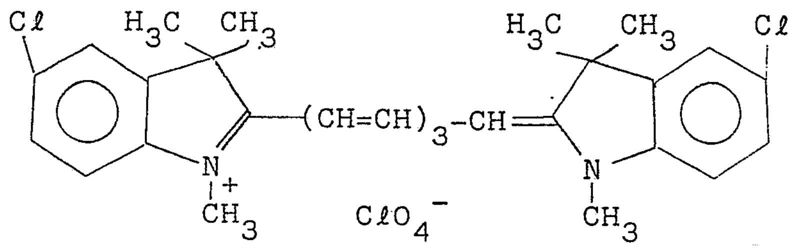

[2]

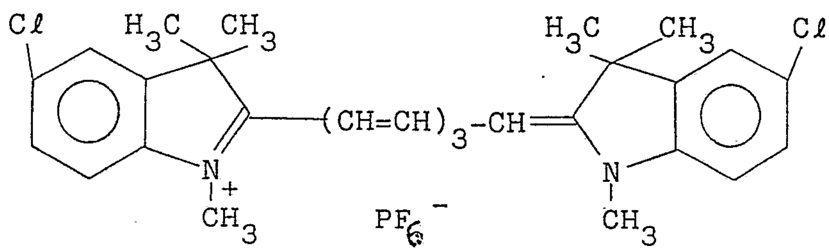

[3]

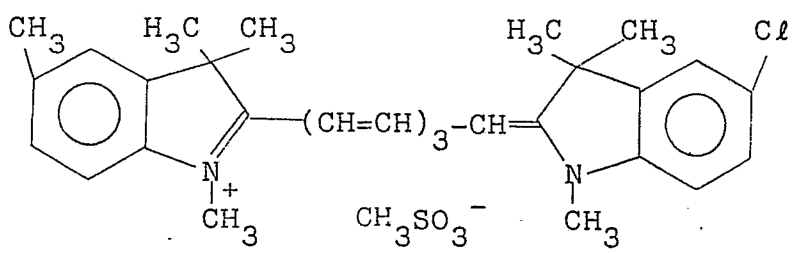

[4]

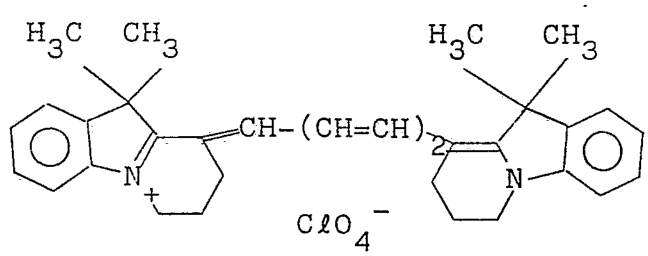

[5]

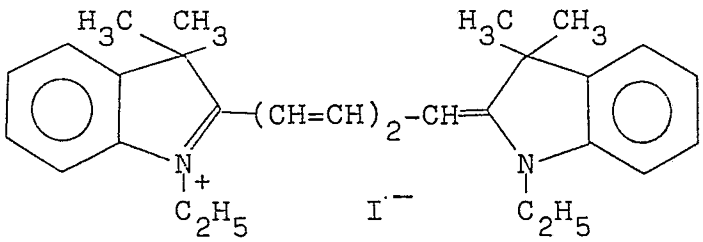

[6]

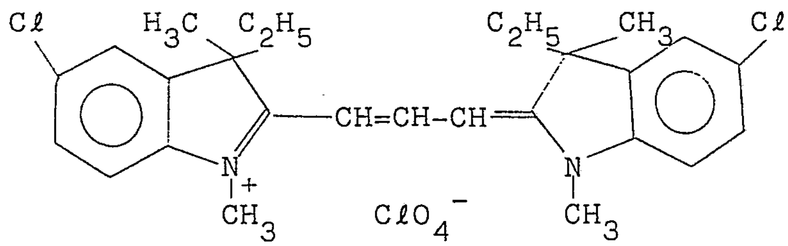

[7]

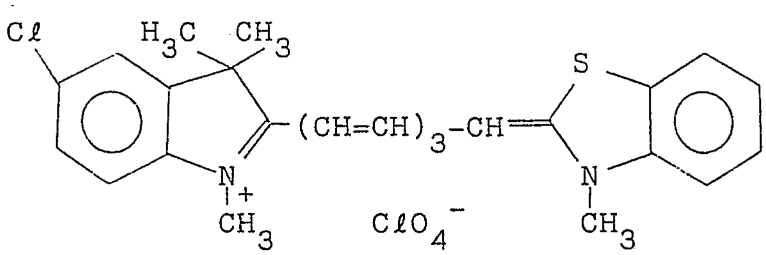

[8]

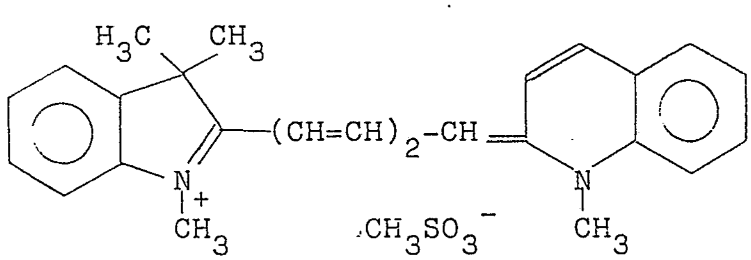

[9]

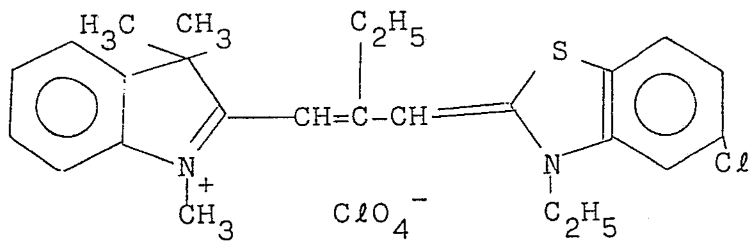

[10]

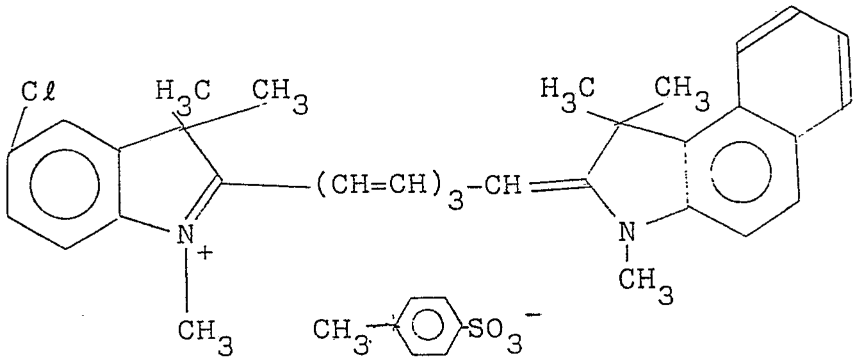

[11]

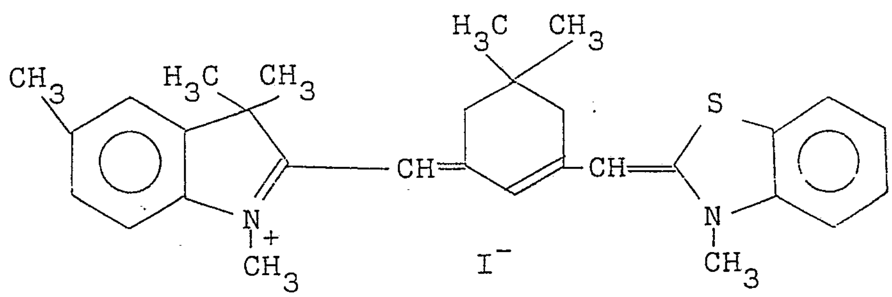

[12]

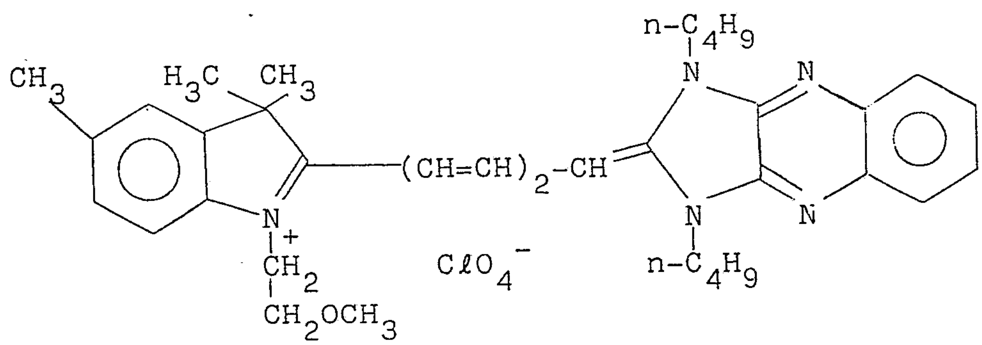

[13]

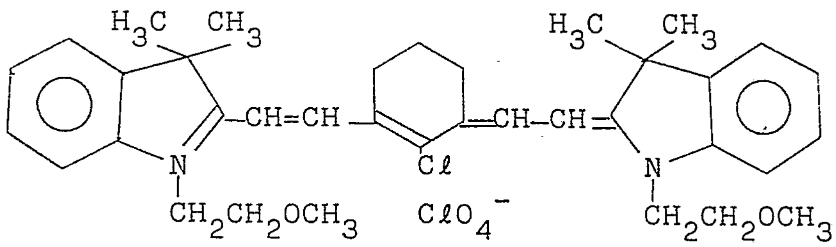

[14]

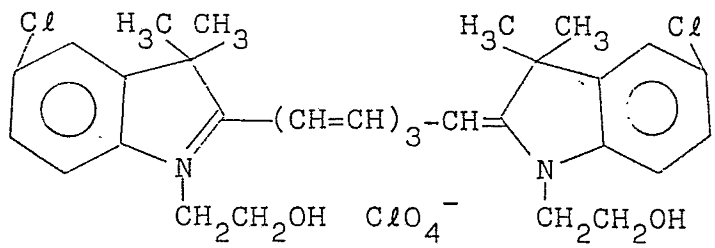

[15]

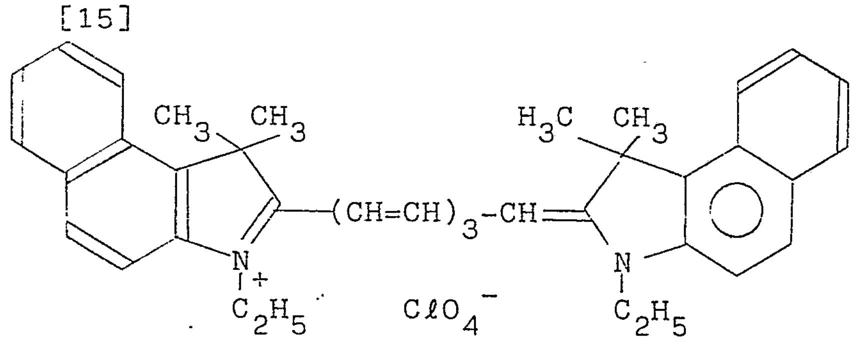

[16]

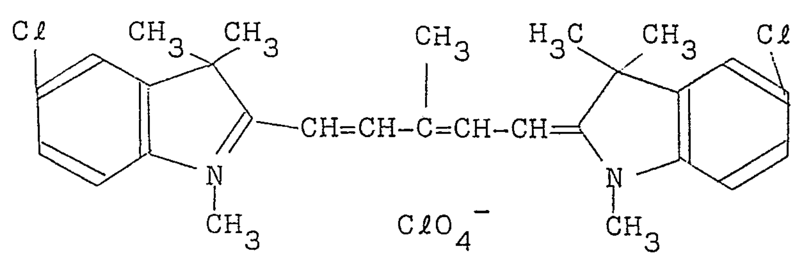

[17]

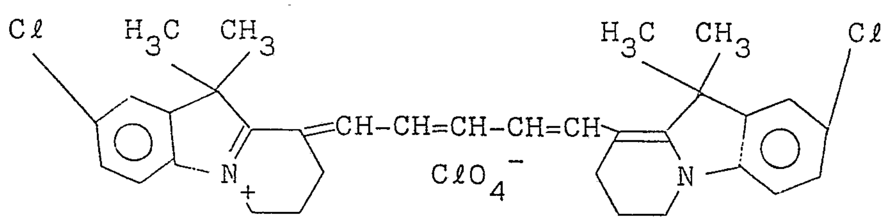

[18]

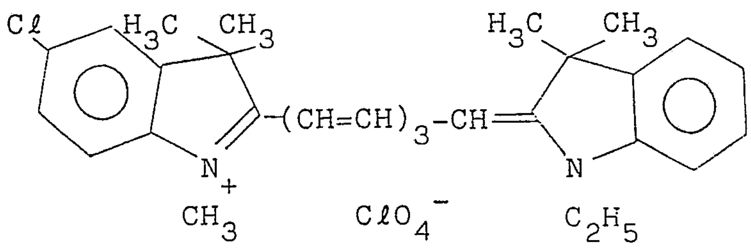

[19]

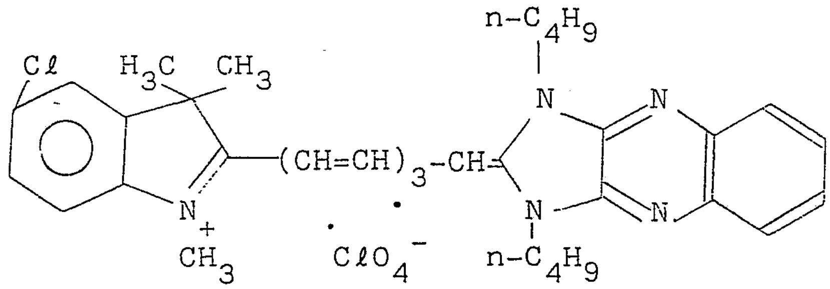

[20]

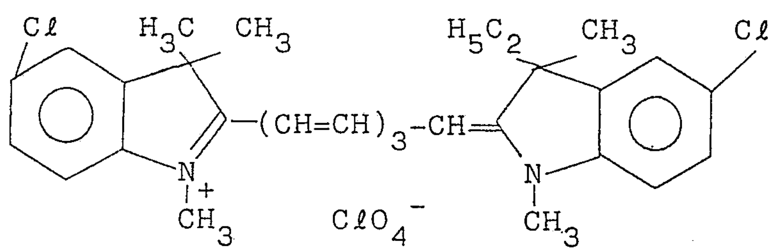

The above-mentioned dyes can be employed independently or in combination. Metal complex salt dye such as nickel, an aluminium dye, or a diimmonium dye may be employed as a singlet oxgyen quencher in combination with the cyanine dye.

The formation of the recording layer can be done by dissolving the above-mentioned dye (as well as a binder, if desired) in a solvent to prepare a coating solution, then coating the solution over the surface of the substrate, and drying the coated layer.

As the solvent for preparing a coating solution, a non-hydrocarbon organic solvent is employed.

Examples of such non-hydrocarbon solvents include esters such as ethyl acetate, butyl acetate, and cellosolve acetate; ketones such as methyl ethyl ketone, cyclohexanone, and methyl isobutyl ketone; halogenated hydrocarbons such as dichloromethane, 1,2-dichloroethane, and chloroform; ethers such as tetrahydrofuran, ethyl ether, and dioxane; alcohols such as ethanol, n-propanol, isopropanol, and n-butanol; amides such as dimethylformamide. Among these non-hydrocarbon solvents, preferably employed is a halogenated hydrocabon solvent. These non-hydrocarbon organic solvents may contain such a hydrocarbon solvent as an aliphatic hydroicarbon solvent, an alicyclic hydrocarbon solvent, an aromatic hydrocarbonate solvent, so long as it is contained in an amount within 50% in volume. The coating solution for the formation of the recording layer may further contain other additives such as an antioxidant, a UV-absorbent, a plasticizer and a lubricant according to the purpose.

A binder can be used for the formation of the recording layer. Examples of the binders include cellulose derivatives such as gelatin, nitrocellulose, and cellulose acetylcellulose; natural organic polymer materials such as dextran, rosin and rubber; and synthetic organic polymers as hydrocarbon resins (e.g., polyethylene, polypropylene, polystyrene and polyisobutylene), vinyl resins (e.g., polyvinyl chloride, polyvinylidene chloride and vinyl chloride/vinyl acetate copolymer), acrylic resins (e.g., polymethyl acrylate and polymethyl methacrylate), and precondensates of thermosetting resins (e.g., polyvinyl alcohol, chlorinated polyethylene, epoxy resin, butyral resin, rubber derivative and phenol formaldehyde resin).

The coating procedure can be carried out by a conventional method such as spray coating, spin coating, dip

coating, roll coating, blade coating, doctor roll coating and screen printing.

When the binder is used for the formation of the recording layer, percent ratio of the dye to the binder is generally in the range of 0.01 to 9g wt.%, preferably 1.0 to 95 wt.%.

The recording layer may be in the form of a single layer or plural layers, and in any case, the thickness of the recording layer is generally in the range of 0.01 to 10 μm, preferably in the range of 0.02 to 1 μm. The recording layer may be provided on only one surface of the substrate or both surfaces of the substrate.

On the recording layer may be provided a reflecting layer for the purpose of increasing the S/N value in the reproduction procedure of information or improving a sensitivity in the recording procedure.

The reflecting layer is essentially composed of a light-reflecting material. The light-reflecting material has a high reflectance for the laser beam. Examples of the light-reflecting materials include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Aℓ, Ga, In, Si, Ge, Te, Pb, Po, Sn and Bi. Preferred are Aℓ, Cr and Ni. These materials can be used alone or in combination. Alloys thereof can be also employed in the invention.

The reflecting layer can be formed on the recording layer using the light-reflecting material according to a known method such as deposition, sputtering or ion plating. The thickness of the reflecting layer is generally in the range of 100 to 3,000 angstroms.

The reflecting layer may be provided between the substrate and the recording layer, and in this case, the recording and reproduction of information is carried out from the recording layer side, namely the opposite side of the substrate side.

A protective layer may be further provided on the recording layer (or the reflecting layer) to physically or chemically protect the recording layer. The protective layer can be also provided on the surface of the substrate where the recording layer is not provided to enhance a resistance to scratch or humidity.

As material of the protective layer, there can be mentioned inorganic materials such as SiO, $SiO_2$, $MgF_2$ and $SnO_2$; and organic materials such as thermoplastic resins, thermosetting resins and UV-curable resins.

The protective layer can be formed on the recording layer (or on the reflecting layer or a silver salt layer) and/or the substrate by laminating a plastic film having been prepared by extrusion over any of those layers and/or the substrate by way of an adhesive layer. Otherwise, a method of vacuum deposition, sputtering or coating can be also applied to form the protective layer. In the case of using the thermoplastic resin or the thermosetting resin, the resin is dissolved in an appropriate solvent to prepare a coating solution, and the solution is coated over the recording layer and/or the substrate. The coated layer is then dried to form a protective layer. In the case of using the UV-curable resin, a solution of the resin in an appropriate solvent is coated over the recording layer and/or the substrate, and the coated layer of the solution is irradiated with ultraviolet rays to cure the layer so as to form a protective layer. In any case, the coating solution may further contain a variety of additives such as an antistatic agent, an antioxidant and a UV-absorbent according to the purpose.

The thickness of the protective layer is generally in the range of 0.1 to 100 μm.

The structure of the information recording medium prepared by the process of the present invention is by no means limited to the above-mentioned structure, and other structures can be also prepared. For example, there can prepared an information recording medium in which two substrates having the above-mentioned constitution and interposing the recording layer are combined using an adhesive, or an information recording medium of air-sandwich structure in which two disc-shaped substrates, at least one of those substrates having the above-mentioned constitution, are combined with each other by way of a ring-shaped outer spacer and a ring-shaped inner spacer so as to form a closed space surrounded by the two substrates and the two spacers.

The examples and the comparison example of the present invention are given below, but these examples by no means restrict the invention.

## Example 1

A disc-shaped amorphous polyolefin substrate employed was produced by injection-molding a copolymer obtained from ethylene and 2-methyl-1,4,5,8-dimethano-1,2,3,4,-4a,5,8,8a-octahydronaphthalene (a non-bornene compound).

1 g. of a cyanine dye having an indolenine structure (corresponding to the aforementioned formula [1]) having following formula was dissolved in 100 cc of 1,2-dicholoroethane to prepare a coating solution having a concentration of 1 wt.%.

Cyanine dye:

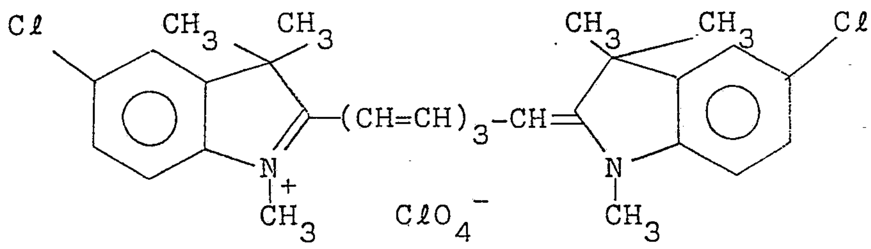

The obtained solution was coated over a disc-shaped amorphous polyolefin substrate having been provided with a tracking guide (outer diameter: 130 mm, inner diameter: 15 mm, thickness: 1.2 mm, track pitch: 1.6 µm, depth of groove: 800 angstroms, produced by Mitsui Petrochemical Industries, Ltd.) by means of spin coating at 2,000 rpm to give a coated layer of the solution, and the coated layer was dried at 70°C for 10 minutes to form a recording layer having dry thickness of 600 angstrtoms on the substrate.

Thus, an information recording medium consisting of a substrate and a recording layer was prepared.

## Comparison Example 1

The procedure of Example 1 was repeated except for replacing the amorphous polyolefin substrate with a polycarbonate substrate, to prepare an information recording medium consisting of a substrate and a recording layer.

## Comparison Example 2

The procedure of Example 1 was repeated except for replacing the cyanine dye having the indolenine structure with one which does not have indolenine structure having the following formula in the preparation of a coating solution, to prepare an information recording medium consisting of a substrate and a recording layer.

Cyanine dye without an indolenine structure:

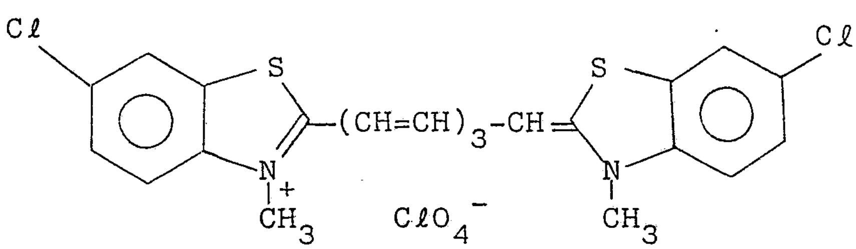

## Comparison Example 3

The procedure of Example 1 was repeated except for replacing the cyanine dye having the indolenine structure with a naphthalo cyanine (NIR-12, trademark of Yamamoto Chemical Co, Ltd.) dissolved in toluene having a concentration of 1 wt. % in the preparation of a coating solution, to pre- pare an information recording medium consisting of a substrate and a recording layer.

Comparison Example 4

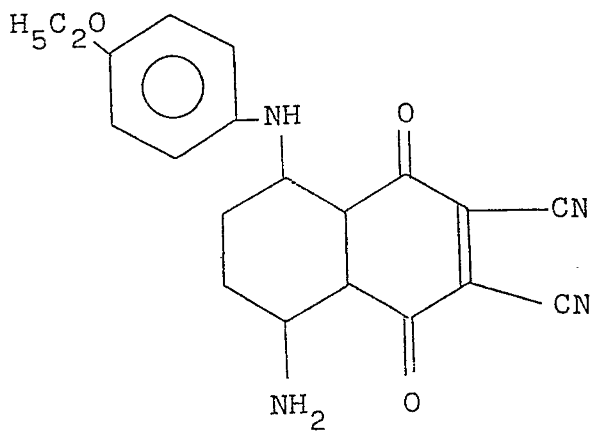

The procedure of Example 1 was repeated except for replacing the cyanine dye with a naphthaquinone dye having the above formula to form a recording layer of thichness of 600 angstroms on the above-described substrate by a method of vacuum deposition, to prepare an information recording medium consisting of a substrate and a recording layer.

Evaluation of Informaiton Recording Medium I

Coating characteristics of a dye coating solution were examined on each obtained information recording medium.

As a result, in an information recording medium with the cyanine dye having the indolenine structure coated on the amorphous polyolefin substrate (Example 1), a satisfactory recording layer along the groove on the surface of the substrate was formed. In contrast, in the case of replacing the substrate with the one made of polycarbonate (Comparison Example 1), examination on property of recording medium described hereinafter could not be done because the groove of the surface of the substrate disappeared. On the other hand, in the case of information recording medium employing the amorphous polyolefin substrate and different kind of dye such as a cyanine dye which does not have the indolenine structure (Comprarion Example 2) exhibited low C/N. In the case of recording medium wherein a naphthalocyanine dye was coated on the same substrate (Comparison Example 3), examination on property of recording medium described hereinafter again could not be done, because the coating solution was not appropriate such that it dissolved the surface of the substrate and the groove then disappeared. Moreover, in the case of employing a naphthoquinone dye as the recording material (Comparison Example 4), it was unable to be coated on the substrate becauese it was not dissolved in the solvent. For this reason, the recording layer was formed by a method of vacuum deposition as stated above.

Evaluation of Information Recording Media II

The information recording media obtained in Example 1 and Comparison Example 2 were evaluated on the record ing and reproducing properties under the following conditions.

| | |
|---|---|
| Semiconductor laser | : wavelength of 830 nm |
| Beam diamter | : 1.5 μm |
| Rotating speed | : 5 m/sec. |
| Recording power | : 9 mW (Modulation frequency of recording was 2. 5 MHz, duty at 50%, groove recording.) |
| Reproducing power | : 0. 4mW |

1) Reflectance

Each energy of incident light and reflected light was measured when reproducing the recorded information under above conditions to obtain a ratio in percentage.

2) C/N

C/N (carrier versus noise ratio) was measured on above reproducing signals.

3) Heat Resistance

After storage of 60 days at a constant tempurature and humidity (60°C and 90 %RH), the information recording medium having the recorded information under above conditions were measured on the reflectance and C/N described-above.

The results are set forth in Table 1.

Table 1

| | Coating Ability | Reflectance (60 C 90%) (%) | C/N (60 C 90%) (%) |
|---|---|---|---|
| Example 1 | Satisfactory | 30 (30) | 55 (55) |
| Com.Ex. 1 | Impossible | -- | -- |
| Com.Ex. 2 | Satisfactory | 20 (15) | 45 (--) |
| Com.Ex. 3 | Impossible | -- | -- |
| Com.Ex. 4 | (Deposition) | 18 (14) | 48 (40) |

Above values in parentheses indicate the results after the heat resistance test of above 3).

## Claims

1. An information recording medium comprising a substrate made of amorphous polyolefin and a recording layer which is provided on the substrate, wherein said recording layer comprises a cyanine dye having an indolenine structure.

2. The information recording medium as claimed in claim 1, wherein said amorphous polyolefin is a polymer derived from a norbornene compound and a compound coplymerizable with the norbornene compound.

3. The information recording medium as claimed in claim 1, wherein said cyanine dye has the following formula:

(I)

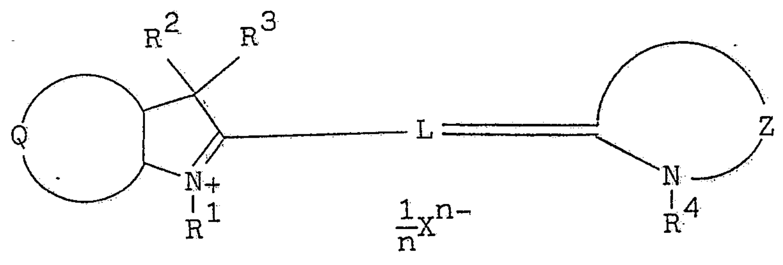

wherein Q represents an atom group to form, together with the attached unit, a benzene ring or a

naphthalene ring; Z represents an atom group to form, together with the attached unit, a 5 or 6 membered heterocyclic ring; L represents a tervalent group which is formed by connecting one, three, five, or seven methiene group(s) in such manner that they form a conjugated double bond; $X^{n-}$ represents n valent counter ion, n represents 1 or 2; each of $R^1$, $R^2$, $R^3$ and $R^4$ represents an alkyl group or an aryl group; L may be linked to $R^1$, $R^2$ $R^3$ or $R^4$ to form a ring; each of Q, Z, L, $R^1$, $R^2$, $R^3$ and $R^4$ may have a substituent group; and $X^{n-}$ may be substituted for Q. Z, L, $R^1$, $R^2$, $R^3$ or $R^4$ to form an inner salt.

4. The information recording medium as claimed in claim 1, wherein said amorphous polyolefin is a polymer derived from a norbornene compound and ethylene.